(19) Europäisches Patentamt
European Patent Office
Office européen des brevets

(11) **EP 0 658 522 B1**

(12) **EUROPÄISCHE PATENTSCHRIFT**

(45) Veröffentlichungstag und Bekanntmachung des Hinweises auf die Patenterteilung:
**30.07.1997 Patentblatt 1997/31**

(51) Int. Cl.$^6$: **C03C 8/14**, C03C 8/16, C23D 5/04

(21) Anmeldenummer: **93830501.8**

(22) Anmeldetag: **14.12.1993**

(54) **Granulate, Verfahren zu ihrer Herstellung sowie ihre Verwendung**

Granulates, method for their production and their use

Granulés, procédé pour leur production et leur utilisation

(84) Benannte Vertragsstaaten:
**ES GB PT**

(43) Veröffentlichungstag der Anmeldung:
**21.06.1995 Patentblatt 1995/25**

(73) Patentinhaber: **FERRO (ITALIA) s.r.l.**
**I- 40123 Bologna (IT)**

(72) Erfinder:
• **Thometzek, Peter, Dr.**
**Florano Modenese (MO) (IT)**

• **Christ, Heinrich, Dr.**
**Spilamberto - S. Vito (MO) (IT)**

(74) Vertreter: **Klausner, Erich**
**c/o Ufficio Internazionale Brevetti**
**Ing. C. Gregorj S.p.A.**
**Via Dogana 1**
**20123 Milano (IT)**

(56) Entgegenhaltungen:
**EP-A- 0 492 280**        **EP-A- 0 510 542**
**DE-A- 2 041 940**

**Beschreibung**

Die vorliegende Erfindung betrifft abriebfeste Granulate, die aus einem oder mehreren anorganischen Farbkörpern, einem oder mehreren anorganischen Elementen und/oder Verbindungen mit einer Mohs-Härte von mindestens 7 sowie einem oder mehreren anorganischen und/oder organischen Bindemitteln und gegebenenfalls Fritten und/oder Gläsern und/oder anorganischen Füllstoffen zusammengesetzt sind, deren Herstellung sowie deren Verwendung.

Die Erzeugung farbiger, schwarzer oder weißer Schichten mit hoher Abriebfestigkeit ist in der keramischen Industrie von großem Interesse. In der Fliesenindustrie, vor allem bei Bodenfliesen, sind abriebresistente Glasuren mit farbiger, weißer oder schwarzer Dekoration sehr gefragt. Auch bei der Herstellung hochverschleißfester Teile im Werkzeugbau werden farbige, weiße oder schwarze, abriebfeste Beschichtungen gefordert.

Zur Einfärbung von Glasuren verwendet man anorganische Farbkörper wie beispielsweise reine Metalloxide oder Mischphasenoxide mit ausreichender Temperaturbeständigkeit. Die Härte dieser Farbkörper ist jedoch für hochverschleißfeste Glasuren unzureichend.

Zur Erhöhung, der Abriebfestigkeit setzt man den Glasuren Korund (mit einer Mohs - Härte von 9) zu. Der Einsatz von Korund und Farbkörpern nebeneinander bringt jedoch keine Lösung des Problems, da die Farbkörper bei Verschleiß trotzdem leicht aus der Glasurschicht herausgebrochen werden. Dies fürt zur Schwächung der Farbintensität. Die zurückbleibenden Einbuchtungen werden leicht verschmutzt.

Farbige Schmelzkorunde erlauben es, den Farbkörper direkt in $Al_2O_3$ eingebunden in die Glasur einzubringen. Sie haben jedoch den Nachteil, daß bei ihrer Herstellung im Lichtbogenofen nur ein sehr begrenztes Farbspektrum sowie Farben geringer Intensität hergestellt werden können. Das Verfahren ist außerdem sehr teuer.

Die EP-A-510542 offenbart eine Beschichtungszusammensetzung bestehend aus anorganischen Farbkörpern, anorganischen Hartstoffen und Glaspulver sowie ein Verfahren zu deren Herstellung und ihre Verwendung bei der Herstellung von Schichten.

Eine solche Beschichtungszusammensetzung ist auch in der DE-A-2041940 beschrieben.

Die EP-A-492280 offenbart Glasurmikrogranalien, Verfahren zur Herstellung fliess- und benetzungsfähiger Glasurmikroganalien sowie deren Verwendung und trockenglasierte keramische Werkstoffe.

Aufgabe war es daher, abriebfeste, weiße, schwarze oder farbige Stoffe zur Verfügung zu stellen, die die oben beschriebenen Nachteile nicht aufweisen und mit denen weiße, schwarze oder farbige abriebfeste Schichten erzeugt werden können.

Überraschenderweise konnte diese Aufgabe mit den erfindungsgemäßen Granulaten gelöst werden.

Gegenstand der Erfindung sind weiße, schwarze oder farbige, abriebfeste Granulate, mit denen weiße, schwarze oder farbige abriebfeste Schichten erzeugt werden können, folgender Zusammensetzung:

| | |
|---|---|
| 2 - 40 Gew.-% | anorganische Farbkörper, |
| 20 - 97 Gew.-% | einer oder mehrerer anorganischer Elemente und/oder Verbindungen mit einer Mohs-Härte von mindestens 7 Einheiten, |
| 1 - 25 Gew.-% | eines oder mehrerer anorganischer und/oder organischer Bindemittel, |
| 0 - 50 Gew.-% | einer oder mehrerer Fritten und/oder Gläser und |
| 0 - 40 Gew.-% | eines oder mehrerer anorganischer Füllstoffe. |

Als anorganische Farbkörper werden vorzugsweise aufgrund ihrer Temperaturbeständigkeit anorganische Oxide eingesetzt, wie beispielsweise reine Oxide, Mischphasenoxide z.B. mit Spinell- oder Rutilstruktur, oder Einschlußpigmente z.B. auf $ZrSiO_4$-Basis.

Um weiße Farbgranulate zu erhalten, werden als Farbkörper vorzugsweise Zirkonsilikat, Titandioxid und/oder Zinnoxid eingesetzt.

Schwarze Farbkörper sind vorzugsweise Mischphasenoxide basierend auf Fe, Cr bzw. Co, Fe, Ni, Cr, Mn bzw. Co, Fe, Ni, Cr.

Anorganische Elemente mit einer Mohs-Härte von mindestens 7 sind vorzugsweise die Hartmetalle. Anorganische Verbindungen mit einer Mohs-Härte von mindestens 7 sind vorzugsweise $Al_2O_3$, Codierit, Zirkon ($ZrO_2$) oder Quarz ($SiO_2$). Auch Carbide wie vorzugsweise SiC, $B_4C$, WC, TiC, ZrC oder Nitride wie vorzugsweise $Si_3N_4$, BN können eingesetzt werden.

Als organische Bindemittel werden vorzugsweise temporäre Binder wie Stärke- und Dextrinleime, Celluloseether wie beispielsweise Methylcellulose oder Carboxymethylcellulose, Bindemittel auf Polysaccharidbasis, Klebstoffe auf Basis von Polyvinylacetaten, Polyacrylaten, Polyvinylalkoholen, Dispersionsklebstoffe auf Kunstharz- oder Kautschukbasis, ein- oder zweikomponentenhaltige Polymerisationsklebstoffe, Polyadditionsklebstoffe bzw. Polykondensationsklebstoffe eingesetzt.

Als anorganische, permanente Bindemittel werden vorzugsweise Natriumsilikat, Kaliumsilikat, Aluminiumphosphat, insbesondere Monoaluminiummonophosphat, Chromphosphat, insbesondere Monochromphosphat, Phosphorsäure, Natriumaluminiumphosphat, Natriumaluminat, Borphosphat, Aluminiumsilikat, Natriumcalciumsilikat, Kaliumcalciumsilikat, Silikophosphat, Kieselsol und $Al(OH)_3$-Sol eingesetzt. Entweder allein oder in geeigneter Kombination werden diese Bindemittel in einer Menge von 1 bis 25 Gew.-%, vorzugsweise 2 bis 15 Gew.-% eingesetzt. Weiterhin kann das Granulat eine oder mehrere keramische Fritten in einer Menge zwischen 0 und 50 Gew.-% enthalten. Diese Fritten weisen bevorzugt folgende Zusammensetzung auf

| SiO$_2$ + B$_2$O$_3$ | 20 - 80 Gew.-% |
|---|---|
| Al$_2$O$_3$ | 0 - 20 Gew.-% |
| R$^1_2$O + R$^2$O | 5 - 70 Gew.-% |
| TiO$_2$ + ZrO$_2$ | 0 - 30 Gew.-% |
| PbO + Bi$_2$O$_3$ + P$_2$O$_5$ | 0 - 80 Gew.-% |
| V$_2$O$_5$ + MoO$_3$ + WO$_3$ | 0 - 10 Gew.-% |

wobei

$$R^1_2O = Li_2O + Na_2O + K_2O \text{ und}$$
$$R^2O = MGO + CAO + SRO + BAO + ZNO.$$

Auch Oxinitridgläser und/oder Oxicarbidgläser können eingesetzt werden.

Durch die Fritten kann die Stabilität des Granulates in einer Glasur sowie die Verbindung zwischen dem Granulat und einer Glasur beim keramischen Brand und somit das Abriebverhalten zusätzlich verbessert werden. Vorzugsweise kann auch eine hochglänzende Transparentfritte in das Granulat eingearbeitet werden, um die Brillanz der Farben zu erhöhen.

Durch die Auswahl geeigneter Fritten kann der mit dem erfindungsgemäßen Granulat nach dem keramischen Brand erhaltene Farbton bzw. die Farbstärke modifiziert bzw. optimiert werden.

Vorzugsweise kann auch eine Fritte mit sehr hoher Kristallisationsgeschwindigkeit, beispielsweise auf Basis des Systems SiO$_2$-Al$_2$O$_3$-Li$_2$O-TiO$_2$ bzw. SiO$_2$-Al$_2$O$_3$-MgO bzw. SiO$_2$-Al$_2$O$_3$-ZnO in das Granulat eingearbeitet werden.

Weiterhin kann das Mikrogranulat einen zusätzlichen anorganischen Füllstoff wie beispielsweise Kaolin, Feldspat, ZnO, CaO, Wollastonit, Tonminerale oder synthetisch hergestellte Produkte wie beispielsweise Knochenasche u.a. enthalten.

Durch geeignete Wahl dieser anorganischen Füllstoffe kann wiederum die Einbindung des Granulates in die Glasur bzw. die Farbbrillanz zusätzlich verbessert werden.

Die farbigen, weißen oder schwarzen Granulate weisen bevorzugt eine Korngrößenverteilung zwischen >0 und 2 mm, besonders bevorzugt zwischen >0 und 0,5 mm. Der Staubanteil <2 Mikron liegt unter 5 Gew.-%, vorzugsweise unter 2 Gew.-%. Die Granulate sind möglichst kugelförmig, weisen eine vorzugsweise enge Kornverteilung auf und sind daher sehr gut rieselfähig. Aufgrund ihrer hohen Härte können sie problemlos pneumatisch gefördert bzw. beim Glasurauftrag rezykliert werden.

Ein weiterer Gegenstand der Erfindung ist ein Verfahren zur Herstellung der weißen, schwarzen oder farbigen, abriebfesten Granulate, welches dadurch gekennzeichnet ist, daß die eingesetzten anorganischen Elemente und/oder Verbindungen mit einer Mohs-Härte von mindestens 7, die anorganischen Farbkörper, gegebenenfalls die Fritten und/oder Gläser sowie gegebenenfalls die weiteren anorganischen Füllstoffe trocken oder naß auf Korngrößen von >0 bis 100 Mikron, vorzugsweise von >0 bis 40 Mikron gemeinsam oder getrennt oder in geeigneter Kombination gemahlen werden, gegebenenfalls durch Siebung oder Sichtung vom Grobkorn befreit werden, im Falle der Naßmahlung getrocknet werden, danach pulverisiert werden, in einem Granulieraggregat mit einem oder mehreren anorganischen und/oder organischen Bindemitteln in einer Menge von 1 bis 25 Gew.-%, vorzugsweise 2 bis 15 Gew.-%, gegebenenfalls unter Zusatz von Wasser bzw. anderer geeigneter Flüssigkeiten granuliert und anschließend zwischen 150°C und 500°C bis zu 24 Stunden getempert werden.

Als Granulieraggregate können Mischaggregate, Zwangsmischer, Granulierteller bzw. Fließbettgranulatoren eingesetzt werden.

Beim nassen Vermahlen wird vorzugsweise nach Zugabe des oder anorganischen und/oder organischen Bindemittel die erhaltene Suspension in einem Sprühturm zu möglichst kugelförmigen Granalien versprüht.

Die Mahlung der Ausgangskomponenten erfolgt vorzugsweise in Kugelmühlen, Gegenstrahlmühlen, Ringspaltmühlen, Walzenmühlen, Prallmühlen oder Perlmühlen. Eine Abtrennung des Grobkornes kann durch Sichtung oder Siebung erfolgen.

Bei der Naßmahlung der Ausgangskomponenten wird nach Bindemittelzugabe das Granulat vorzugsweise in einem Sprühtrockner, Fließbetttrockner oder Walzentrockner hergestellt.

Die nach der Granulation vorzugsweise durchgeführte Temperung zwischen 150°C e 500°C dient zur zusätzlichen Festigung bzw. Härtung der Granulatkörner.

Die Herstellung des Granulates kann auch in einem Heißgasreaktor mit starker Wirbelströmung (Turbulator, Fa. Maurer bzw. Reaktionskammer, Fa. Babcock) bei Temperaturen bis zu 1500°C erfolgen.

Die erfindungsgemäßen weißen, schwarzen oder farbigen Granulate werden zur Herstellung von verschleißfesten keramischen Schichten verwendet.

Die erfindungsgemäßen Granulate werden bevorzugt als Verschleißschutz in Fliesen, besonders in Bodenfliesen eingesetzt.

Weiterhin können die erfindungsgemäßen Granulate zur Einfärbung von keramischen Glasuren oder Emailglasuren, von Lacken Kunststoffen, Gläsern etc. verwendet werden.

Eine weitere Anwendung erfolgt in Schleifkörpern.

Die Applikation der erfindungsgemäßen Granulate kann durch Aufstreuen, Siebauftrag, Auftrag mit Pistolen, auch im elektrostatischen Feld, sowie durch Plasmaspritzen erfolgen. Plasmaspritzen auf Metalle erfolgt vorzugsweise mit Si$_3$N$_4$ oder SiC enthaltenden Granulaten.

Beispiel 1

In einem Zwangsmischer (Fa. Eirich) werden folgende Ausgangsprodukte vorgelegt:

0,40 kg eines blauen Farbkörpers auf Basis von Aluminium- und Kobaltoxid
0,90 kg Aluminiumoxid mit einem $Al_2O_3$-Gehalt von über 97 Gew.-% und einer Korngrößenverteilung von 80 Gew.-% kleiner 40 μ.

Man fügt 0,40 kg einer keramischen Fritte folgender Zusammensetzung

| $SiO_2$ | 58,2 Gew.-% |
|---------|-------------|
| $B_2O_3$ | 7,7 Gew.-% |
| $Al_2O_3$ | 9,5 Gew.-% |
| $Na_2O$ | 1,3 Gew.-% |
| $K_2O$ | 3,6 Gew.-% |
| MgO | 1,4 Gew.-% |
| CaO | 15,1 Gew.-% |
| $ZrO_2$ | 0,8 Gew.-% |
| $P_2O_5$ | 0,2 Gew.-% |
| ZnO | 2,2 Gew.-% |

hinzu, die zuvor in einer 500 g - Porzellankugelmühle unter Zusatz von 1,0 g Propylenglykol auf eine Korngrößenverteilung von >0 bis 80 Mikron mit einem Kornverteilungsmaximum von 12 Mikron gebracht wurde.

Nach intensivem Rühren gibt man langsam 615 g einer wäßrigen, 37 gew.-%igen Natriumsilikatlösung hinzu.

Nach 5 Minuten intensiver Granulation wird das erhaltene Produkt in einem Trockenschrank 2 Stunden bei 250°C getempert.

Nach Absiebung des Grobanteils über 500 Mikron weist das erhaltene Farbgranulat eine Korngrößenverteilung zwischen >0 und 500 Mikron mit einem Kornverteilungsmaximum von 70 Mikron auf.

6 Gew.-% des erhaltenen farbigen Granulates werden in eine Glasur für Fußbodenfliesen mit folgender Zusammensetzung eingearbeitet:

| 10 Gew.-% | Fritte auf Basis von $SiO_2$, $B_2O_3$, $Al_2O_3$, $Na_2O$ |
|-----------|-------------|
| 10 Gew.-% | Fritte auf Basis von $SiO_2$, $B_2O_3$, $Al_2O_3$, $ZrO_2$ |
| 24 Gew.-% | Natriumfeldspat |
| 5 Gew.-% | Zinkoxid |
| 20 Gew.-% | Wollastonit |
| 8 Gew.-% | Aluminiumoxid |
| 17 Gew.-% | Zirkonsilikat |

6 Gew.-%    Kaolin

Nach Auftrag auf einen weißen keramischen Scherben erfolgt der keramische Brand bei 1170°C in 70 Minuten in einem Rollenofen.

Der Abriebtest erfolgt nach der europäischen Norm EN 154, Methode MCC (wie unter 3,2 beschrieben). Nach 25000 Umdrehungen erhält man einen Glasurabrieb von 0,58 g. Die Glasur ohne das erfindungsgemäße Granulat zeigt einen höheren Abrieb von 0,70 g. Bei Zugabe von 6 Gew.-% Korund anstelle des erfindungsgemäßen Granulates erzeugt man unter identischen Bedingungen einen Abrieb von 0,63 g.

**Patentansprüche**

1.   Weiße, schwarze oder farbige Granulate zur Erzeugung weißer, schwarzer oder farbiger Schichten mit hoher Abriebfestigkeit, dadurch gekennzeichnet, daß die Granulate folgende Zusammensetzung aufweisen:

| 2 - 40 Gew.-% | anorganische Farbkörper, |
|---------------|--------------------------|
| 20 - 97 Gew.-% | einer oder mehrerer anorganischer Elemente und/oder Verbindungen mit einer Mohs-Härte von mindestens 7 Einheiten, |
| 1 - 25 Gew.-% | eines oder mehrerer anorganischer und/oder organischer Bindemittel, |
| 0 - 50 Gew.-% | einer oder mehrerer Fritten und/oder Gläser und |
| 0 - 40 Gew.-% | eines oder mehrerer anorganischer Füllstoffe. |

2.   Verfahren zur Herstellung von weißen, schwarzen oder farbigen Granulaten nach Anspruch 1, dadurch gekennzeichnet, daß die Granulatkomponenten ausschließlich des/der Bindemittel trocken oder naß, gemeinsam oder getrennt oder in geeigneter Kombination auf Korngrößen von >0 bis 100 Mikron, vorzugsweise >0 bis 40 Mikron gemahlen werden, im Falle der Naßmahlung getrocknet werden, danach pulverisiert werden, in einem Granulieraggregat mit einem oder mehreren anorganischen und/oder organischen Bindemitteln in einer Menge von 1 bis 25 Gew.-%, vorzugsweise 2 bis 15 Gew.-%, bezogen auf den Feststoffgehalt, gegebenenfalls unter Zusatz von Wasser bzw. anderer geeigneter Flüssigkeiten granuliert und anschließend zwischen 150°C und 500°C bis zu 24 Stunden getempert werden.

3.   Verfahren zur Herstellung von weißen, schwarzen oder farbigen Granulaten nach Anspruch 1, dadurch gekennzeichnet, daß die Granulatkomponenten ausschließlich des/der Bindemittel naß auf Korngrößen von >0 bis 40 Mikron gemahlen werden, mit einem oder mehreren anorganischen und/oder organischen Bindemitteln in einer Menge von 1 bis 25Gew.-%, vorzugsweise 2 bis 15 Gew.-%, bezogen auf den Feststoffgehalt, gegebenenfalls unter Zusatz von Wasser versetzt werden, die so erhaltene Suspension in einem Sprühturm zu möglichst kugelförmigen Granalien versprüht wird und die Granalien gegebenenfalls zwischen 150°C und 500°C bis zu 24 Stunden getempert werden.

4. Verwendung der weißen, schwarzen oder farbigen Granulate nach Anspruch 1 bei der Herstellung von verschleißfesten weißen oder farbigen Schichten, vorzugsweise keramischen Schichten.

5. Verwendung der weißen, schwarzen oder farbigen Granulate nach Anspruch 1 zur Einfärbung von Lacken, Kunststoffen, keramischen Schichten, Emailschichten, Gläsern, oder Schleifkörpern.

## Claims

1. White, black or coloured granular materials for the production of white, black or coloured coatings having a high abrasion resistance, characterised in that the granular materials have the following composition:

| | |
|---|---|
| 2 - 40 % by weight | of inorganic colouring bodies, |
| 20 - 97 % by weight | of one or more inorganic elements and/or compounds with a Mohs hardness of at least 7 units, |
| 1 - 25 % by weight | of one or more inorganic and/or organic binders, |
| 0 - 50 % by weight | of one or more frits and/or glasses, and |
| 0 - 40 % by weight | of one or more inorganic fillers. |

2. A method of producing white, black or coloured granular materials according to claim 1, characterised in that the granular material components, excluding the binder(s), are ground dry or wet, jointly or separately, or in a suitable combination, to particle sizes of >0 to 100 microns, preferably >0 to 40 microns, are dried if wet-grinding is used, are thereafter pulverised, are granulated in a granulating unit with one or more inorganic and/or organic binders in an amount of 1 to 25 % by weight, preferably 2 to 15 % by weight, with respect to the solids content, optionally with the addition of water or other suitable liquids, and are subsequently calcined between 150°C and 500°C for up to 24 hours.

3. A method of producing white, black or coloured granular materials according to claim 1, characterised in that the granular material components, excluding the binder(s), are wet-ground to particle sizes of >0 to 40 microns, are mixed with one or more inorganic and/or organic binders in an amount of 1 to 25 % by weight, preferably 2 to 15 % by weight, with respect to the solids content, optionally with the addition of water, the suspension thus obtained is atomised in a spray tower to form granules which are as spherical as possible, and the granules are optionally calcined between 150°C and 500°C for up to 24 hours.

4. Use of the white, black or coloured granular materials according to claim 1 in the production of abrasion-resistant white or coloured coatings, preferably ceramic coatings.

5. Use of the white, black or coloured granular materials according to claim 1 for colouring lacquers, plastics, ceramic coatings, enamel coatings, glasses or abrasive products.

## Revendications

1. Granulés blancs, noirs ou colorés pour la production de couches blanches, noires ou colorées ayant une résistance à l'usure élevée, caractérisés par ce que les granulés ont la composition suivante:

| | |
|---|---|
| 2 - 40% | en poids de pigments inorganiques, |
| 20 - 97% | en poids d'un ou plusieurs éléments et/ou composés inorganiques ayant une dureté Mohs d'au moins 7 unités, |
| 1 - 25% | en poids d'un ou de plusieurs liants organiques et/ou inorganiques, |
| 0 - 50% | en poids d'une ou de plusieurs frittes et/ou verres et |
| 0 - 40% | en poids d'une ou de plusieurs charges inorganiques. |

2. Procédé pour la production de granulés blancs, noirs ou colorés selon la revendication 1, caractérisé en ce que les composants des granulés à l'exclusion du liant ou des liants sont broyés, à sec ou humide, ensemble ou séparément ou en combinaisons appropriées, à une granulométrie comprise entre > 0 et 100 microns, de préférence entre > 0 et 40 microns, dans le cas du broyage à humide ils sont séchés, puis ils sont pulverisés, granulés dans une unité de granulation avec un ou plusieurs liants inorganiques et/ou organiques en quantité comprise entre 1 et 25% en poids, de préférence entre 2 et 15% en poids, par rapport au contenu de solides, le cas échéant en ajoutant de l'eau ou bien d'autres liquides appropriés, et par la suite ils sont recuits entre 150°C et 500°C pour au maximum 24 heures.

3. Procédé pour la production de granulés blancs, noirs ou colorés selon la revendication 1 caractérisé en ce que les composants des granulés, à l'exclusion du ou des liants, sont broyés à humide à une granulométrie comprise entre > 0 et 40 microns, sont mélangés avec un ou plusieurs liants inorganiques et/ou organiques en quantité comprise entre 1 et 25% en poids, de préférence entre 2 et 15% en poids, par rapport au contenu de solides, le cas échéant en ajoutant de l'eau, la suspension ainsi obtenue est pulvérisée dans une tour de pulvérisation en grains les plus sphériques possible et, le cas échéant, les grains sont recuits entre 150°C et 500°C pour au maximum 24 heures.

4. Emploi des granulés blancs, noirs ou colorés selon la revendication 1 pour la production de couches blanches ou colorées résistantes à l'usure, de préférence couches céramiques.

5. Emploi des granulés blancs, noirs ou colorés selon la revendication 1 pour la coloration de peintures, matières synthétiques, couches céramiques, couches d'émail, verres ou abrasifs.